(19) **Europäisches Patentamt**

**European Patent Office**

**Office européen des brevets**

(11) **EP 1 013 128 B1**

(12) **EUROPÄISCHE PATENTSCHRIFT**

(45) Veröffentlichungstag und Bekanntmachung des Hinweises auf die Patenterteilung:
**28.01.2004 Patentblatt 2004/05**

(21) Anmeldenummer: **98949945.4**

(22) Anmeldetag: **26.08.1998**

(51) Int Cl.[7]: **H04Q 7/38**, H04B 7/26

(86) Internationale Anmeldenummer:
**PCT/DE1998/002506**

(87) Internationale Veröffentlichungsnummer:
**WO 1999/012374 (11.03.1999 Gazette 1999/10)**

(54) **VERFAHREN UND ANORDNUNG ZUR ÜBERTRAGUNG VON NUTZDATEN IN EINEM FUNKKOMMUNIKATIONSSYSTEM**

METHOD AND DEVICE FOR TRANSMITTING USER DATA IN A RADIOCOMMUNICATION SYSTEM

PROCEDE ET DISPOSITIF DE TRANSMISSION DE DONNEES D'UTILISATEUR DANS UN SYSTEME DE RADIOCOMMUNICATION

(84) Benannte Vertragsstaaten:
**DE GB IT**

(30) Priorität: **01.09.1997 DE 19738156**

(43) Veröffentlichungstag der Anmeldung:
**28.06.2000 Patentblatt 2000/26**

(73) Patentinhaber: **SIEMENS AKTIENGESELLSCHAFT**
**80333 München (DE)**

(72) Erfinder:
• **BAHRENBURG, Stefan**
**D-81477 München (DE)**
• **BAIER, Paul, Walter**
**D-67661 Kaiserslautern (DE)**
• **EMMER, Dieter**
**D-82110 Germering (DE)**
• **MAYER, Jürgen**
**D-67105 Schifferstadt (DE)**
• **SCHLEE, Johannes**
**D-67657 Kaiserslautern (DE)**
• **WEBER, Tobias**
**D-67731 Otterbach (DE)**

(56) Entgegenhaltungen:
**WO-A-97/05707**          **DE-A- 19 549 148**

## Beschreibung

Die Erfindung betrifft ein Verfahren und eine Anordnung zur Übertragung von Nutzdaten in einem Funkkommunikationssystem, insbesondere in einem Mobilfunksystem.

In Kommunikationssystemen werden Nachrichten (beispielsweise Sprache, Bildinformation oder andere Daten) über Übertragungskanäle übertragen, bei Funkkommunikationssystemen erfolgt dies mit Hilfe von elektromagnetischen Wellen über eine Funkschnittstelle. Das Abstrahlen der elektromagnetischen Wellen erfolgt dabei mit Trägerfrequenzen, die in dem für das jeweilige System vorgesehenen Frequenzband liegen. Beim GSM-Mobilfunksystem (Global System for Mobile Communication) liegen die Trägerfrequenzen im Bereich von 900 MHz. Für zukünftige Funkkommunikationssysteme, beispielsweise das UMTS (Universal Mobile Telecommunication System) oder andere Systeme der 3. Generation sind Frequenzen im Frequenzband von ca. 2000 MHz vorgesehen.

Aus der DE 195 49 148 ist ein Funk-Kommunikationssystem bekannt, das eine CDMA-Teilnehmerseparierung (CDMA Code Division Multiple Access) nutzt, wobei die Funkschnittstelle zusätzlich eine Zeitmultiplex-Teilnehmerseparierung (TDMA Time Division Multiple Access) aufweist. In den Basisstationen wird empfangsseitig ein Joint-Detection-Verfahren angewendet, um unter Kenntnis von CDMA-Codes mehrerer Teilnehmer eine verbesserte Detektion der übertragenen Nutzdaten zu gewährleisten, da die Intrazellinterferenz innerhalb eines Funkversorgungsbereiches nahezu vollständig eliminiert werden kann. Dabei ist es bekannt, daß einer Kommunikationsverbindung über die Funkschnittstelle auch mehrere Übertragungskanäle zugeteilt werden können, wobei jeder Übertragungskanal durch einen individuellen CDMA-Code unterscheidbar ist.

In den mobilen Funkstationen wird im Vergleich dazu empfangsseitig eine Detektion der übertragenen Nutzdaten nur auf der Grundlage des zugewiesenen CDMA-Codes vorgenommen, da nur dieser a-priori in der mobilen Funkstation bekannt ist. Die CDMA-Codes der anderen Teilnehmer sind nicht bekannt und können somit nicht in die Detektion wie bei einem Joint-Detection-Verfahren einbezogen werden. Die übertragenen Nutzdaten der Kommunikationsverbindungen zu den anderen mobilen Funkstationen werden wie bei der bekannten DS-CDMA-Teilnehmerseparierung (DS Direct-Sequence) als Rauschen behandelt.

Aus der WO 97/05707 ist ein Verfahren zur Verminderung von Gleichkanalstörungen in Empfangseinrichtungen von Basis- und Teilnehmerstationen eines zellular aufgebauten Funksystems bekannt. In den Funkzellen werden frequenzgleiche Funkkanäle benutzt, wobei eine Signalübertragung gemäß einem bekannten JD-CDMA-Verfahren (JD - Joint Detection) erfolgt. In einer Funkzelle werden in den jeweiligen Empfangseinrichtungen beim Dekodieren zumindest teilweise Spreizkodes verwendet, die in mindestens einer anderen, das gleiche Frequenzband benutzenden Funkzelle, verwendet werden.

Der Erfindung liegt die Aufgabe zugrunde, ein Verfahren und eine Anordnung anzugeben, die die Detektionsmöglichkeiten einer mobilen Funkstation verbessern. Diese Aufgabe wird gemäß der Erfindung durch das Verfahren nach den Merkmalen des Patentanspruchs 1 und durch die Anordnung nach den Merkmalen des Patentanspruchs 12 gelöst. Vorteilhafte Weiterbildungen der Erfindung sind den Unteransprüchen zu entnehmen.

Erfindungsgemäß werden beim Verfahren zur Übertragung von Nutzdaten in einem Funkkommunikationssystem Nutzdaten von Kommunikationsverbindungen von/zu einer ersten und einer zweiten Funkstation, die sich jeweils in einem Funkversorgungsbereich einer ersten Basisstation befinden, gemäß einem CDMA-Teilnehmerseparierungsverfahren übertragen. Dem Funkversorgungsbereich der ersten Basisstation wird zumindest ein Frequenzkanal mit mehreren CDMA-Codes zugeordnet. Der ersten und der zweiten Funkstation wird eine Zuweisung eines ersten bzw. eines zweiten CDMA-Codes signalisiert. Zusätzlich wird der ersten Funkstation auch die Zuweisung des zweiten CDMA-Code zu der zweiten Funkstation signalisiert, woraufhin der erste und der zweite CDMA-Code von der ersten Funkstation für die Detektion der übertragenen Nutzdaten verwendet werden.

Durch dieses erfindungsgemäße Verfahren kann die erste Funkstation den zweiten CDMA-Code zusätzlich für die Detektion der zu der ersten Funkstation übertragenen Nutzdaten verwenden, wodurch die Intrazellinterferenz in der ersten Funkstation nahezu vollständig eliminiert wird und die Empfangsqualität durch ein besseres Signal-Stör-Verhältnis (SNR - Signal-To-Noise-Ratio) erhöht wird.

In einer ersten Weiterbildung der Erfindung werden die Nutzdaten zusätzlich innerhalb eines TDMA-Teilnehmerseparierungsverfahrens übertragen. Dabei ist jeder Funkkanal in Zeitschlitze untergliedert. Dieses Teilnehmerseparierungsverfahren besitzt den Vorteil, daß die Nutzdatenübertragung von und zu den Funkstationen in einem Frequenzkanal erfolgen kann, wobei abwechselnd ein bestimmte Anzahl Zeitschlitze für die Aufwärtsrichtung und bestimmte Anzahl Zeitschlitze für die Abwärtsrichtung verwendet werden.

In einer weiteren Weiterbildung der Erfindung erfolgt die Detektion der Nutzdaten in der ersten Funkstation gemäß einem bekannten Joint-Detection-Verfahren. Durch dieses Verfahren kann vorteilhaft die Interferenz am Aufenthaltsort der ersten Funkstation nahezu vollständig eliminiert werden.

Die Zuweisung der CDMA-Codes zu der ersten bzw. der zweiten Funkstation kann nach weiteren Weiterbildungen der Erfindung netzseitig erfolgen und von der ersten Basisstation signalisiert werden, oder alternativ indem die erste und die zweite Funkstation den ersten bzw. den zweiten CDMA-Code auswählen und die Auswahl jeweils der ersten Basisstation signalisiert wird. Hierdurch kann jeweils eine flexible und dynamische Zuweisung von CDMA-Codes durchgeführt werden. Bei der netzseitigen Zuweisung kann darüberhinaus eine Basisstationsübergreifende Zuweisung der CDMA-Codes erfolgen, wodurch bei einer Nutzung unterschiedlicher CDMA-Codes in benachbarten Funkversorgungsgebieten vorteilhaft die Empfangsqualität durch eine geringere Intrazellinterferenz erhöht wird.

In einer weiteren vorteilhaften Weiterbildung der Erfindung wird der ersten Funkstation auch die Zuweisung von weiteren CDMA-Codes zu weiteren Funkstationen signalisiert, die zusätzlich von der ersten Funkstation für die Detektion der zu ihr übertragenen Nutzdaten verwendet werden. Die weiteren Funkstationen befinden sich dabei in dem gleichen und/oder in einem jeweils benachbarten Funkversorgungsbereich, und von/zu zu den weiteren Funkstationen werden jeweils Nutzdaten in einem gleichen Frequenzkanal und/oder in einem gleichen Zeitschlitz übertragen.

Die Signalisierung der Zuweisung von weiteren CDMA-Codes in den benachbarten Funkversorgungsbereichen hat eine erhöhte Signalsierungslast zur Folge, vorteilhaft wird jedoch eine weitere Erhöhung des Signal-Stör-Abstandes und damit die Verbesserung der Empfangsqualität ermöglicht.

In einer Weiterbildung der vorangehenden Weiterbildung wird vorteilhaft der ersten Funkstation nur die Zuweisung der gleichzeitig aktiven CDMA-Codes zu den weiteren Funkstationen signalisiert. Hierdurch kann vorteilhaft Rechenleistung bei der Detektion über den Joint-Detection-Algorithmus eingespart, der Signal-Stör-Abstand vergrößert und eine optimale Empfangsqualität bei minimaler Signalverarbeitung erreicht wird.

Die Zuweisung bzw. die Signalisierung der Zuweisung zu der ersten Funkstation kann alternativ durch eine Übertragung der jeweiligen CDMA-Codes oder durch eine Übertragung von Codekennzahlen, die jeweils einem CDMA-Code zugeordnet sind, erfolgen. Die übertragenen CDMA-Codes werden nach einer ersten Ausgestaltung in einer Speichereinrichtung der ersten Funkstation gespeichert bzw. nach einer zweiten Ausgestaltung werden die korrespondierenden CDMA-Codes von der erste Funkstation anhand der Codekennzahlen ermittelt und in einer Speichereinrichtung gespeichert. Da die Realisierungskosten der Speichereinrichtung in der ersten Funkstation nahezu vernachlässigbar sind, kann durch diese einfache Maßnahme vorteilhaft die Signalisierungslast deutlich verringert werden.

Gemäß einer weiteren Weiterbildung der Erfindung wird der ersten Funkstation bei einem Verbindungsaufbau von/zu einer weiteren Funkstation die Zuweisung eines jeweils weiteren CDMA-Codes signalisiert, wobei die Nutzdaten der Kommunikationsverbindung von/zu der weiteren Funkstation erst nach der erfolgten Signalisierung zu der ersten Funkstation übertragen werden. Hierdurch wird vorteilhaft sichergestellt, daß die erste Funkstation immer in Kenntnis aller gleichzeitig aktiven CDMA-Codes ist, sobald diese zugewiesen und noch bevor diese von den weiteren Funkstationen verwendet werden, und somit eine gleichbleibend hohe Empfangsqualität für die Kommunikationsverbindung zu der ersten Funkstation garantiert wird.

Weiterhin werden vorteilhafterweise Änderungen der Zuweisung der CDMA-Codes der ersten Funkstation signalisiert, wenn eine weiteren Kommunikationsverbindung zu einer weiteren Funkstation aufgebaut bzw. ausgelöst wird, wenn für die weitere Kommunikationsverbindung eine höhere bzw. niedrigere Übertragungskapazität angefordert wird, oder wenn bei einem Übertritt der weiteren Funkstation in einen benachbarten Funkversorgungsbereich einer zweiten Basisstation eine Verbindungs-übernahme angefordert wird. Hierdurch wird der ersten Funkstation vorteilhaft jede Änderung der Zuweisung und Nutzung von CDMA-Codes signalisiert.

Ausführungsbeispiele der Erfindung werden anhand der beiliegenden Zeichnungen näher erläutert.

Dabei zeigen

FIG 1  ein Blockschaltbild eines Funkkommunikationssystems, insbesondere eines Mobilfunksystems,

FIG 2  eine schematische Darstellung der Rahmenstruktur der Funkschnittstelle,

FIG 3  eine schematische Darstellung des Aufbaus eines Funkblocks,

FIG 4  ein Blockschaltbild des Empfängers einer Funkstation,

FIG 5  ein Signalablaufdiagramm eines Verbindungsaufbaus zu einer weiteren Funkstation.

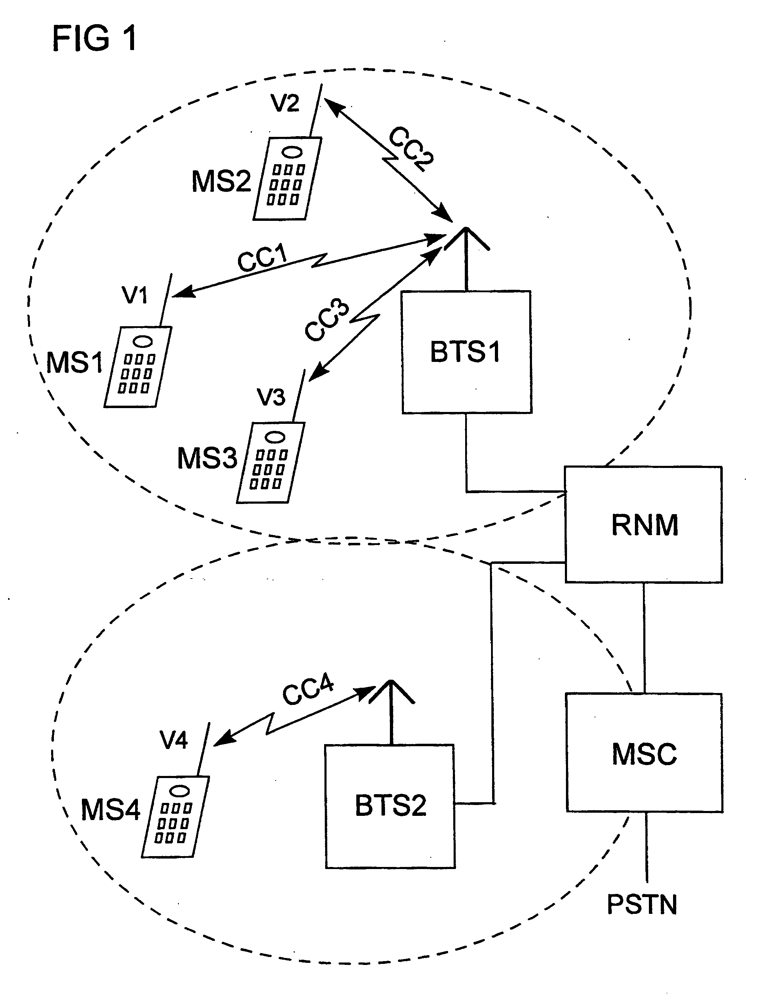

Das in FIG 1 dargestellte Funkkommunikationssystem entspricht in seiner Struktur einem bekannten GSM-Mobilfunknetz, das aus einer Vielzahl von Mobilvermittlungsstellen MSC besteht, die untereinander vernetzt sind bzw. den Zugang zu einem Festnetz PSTN herstellen. Weiterhin sind diese Mobilvermittlungsstellen MSC mit jeweils zumindest einer Einrichtung zur Zuteilung funktechnischer Ressourcen RNM verbunden. Jede dieser Einrichtungen RNM ermöglicht wiederum eine Verbindung zu zumindest einer Basisstation BTS, in dem dargestellten Fall zu einer ersten BTS1 und einer zweiten Basisstation BTS2. Diese Basisstationen BTS1 und BTS2 sind Funkstationen, die über eine Funkschnittstelle Kommunikationsverbindungen zu weiteren Funkstationen, in dem dargestellten Fall zu mobilen Funkstationen MS1 bis MS4 aufbauen können.

In FIG 1 sind beispielhaft drei Kommunikationsverbindungen V1, V2, V3 zur Übertragung von Nutzdaten und Signalisierungsinformationen zwischen den mobilen Funkstationen MS1, MS2, MS3 und der ersten Basisstation BTS1 dargestellt, wobei jeder mobilen Funkstation MS1, MS2, MS3 jeweils ein CDMA-Code CC1, CC2 bzw. CC3 zur Detektion der Nutzdaten in der jeweiligen Kommunikationsverbindung V1, V2, V3 zugewiesen ist. Weiterhin ist eine vierte Kommunikationsverbindung V4 zur Übertragung von Nutzdaten und Signalisierungsinformationen zwischen der vierten mobilen Funkstation MS4 und der zweiten Basisstation BTS2 dargestellt. Dieser vierten mobilen Funkstation MS4 ist der CDMA-Code CC4 zur Detektion der Nutzdaten zugewiesen.

Die Funktionalität dieser Struktur wird vom Funkkommunikationssystem nach der Erfindung genutzt; sie ist jedoch auch auf andere Funkkommunikationssysteme, wie beispielsweise drahtlose Teilnehmerzugangsnetze (Access-Networks), übertragbar, in denen die Erfindung gleichsam zum Einsatz kommen kann.

Die Basisstationen BTS1 und BTS2 sind mit jeweils einer Antenneneinrichtung verbunden, die z.B. aus drei Einzelstrahlern besteht. Jeder der Einzelstrahler strahlt gerichtet in einen Sektor der durch die jeweilige Basisstation BTS1 oder BTS2 versorgten Funkzelle. Es können jedoch alternativ auch eine größere Anzahl von Einzelstahlern (gemäß adaptiver Antennen) eingesetzt werden, so daß auch eine räumliche Teilnehmerseparierung nach einem SDMA-Verfahren (Space Division Multiple Access) eingesetzt werden kann.

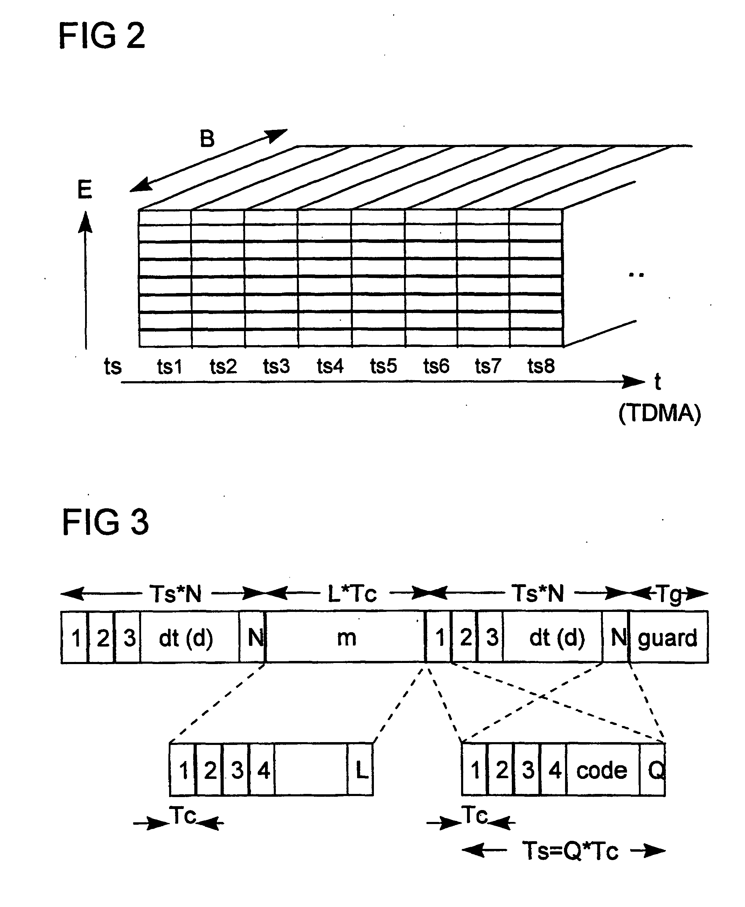

Die Rahmenstruktur der Funkschnittstelle ist aus der FIG 2 ersichtlich. Gemäß einer TDMA-Komponente ist eine Aufteilung eines breitbandigen Frequenzbereiches, beispielsweise der Bandbreite B = 1,6 MHz, in mehrere Zeitschlitze ts, beispielsweise 8 Zeitschlitze ts1 bis ts8 vorgesehen. Jeder Zeitschlitz ts innerhalb des Frequenzbereiches B bildet einen Frequenzkanal. Innerhalb der Frequenzkanäle, die zur Nutzdatenübertragung vorgesehen sind, werden Informationen mehrerer Verbindungen in Funkblöcken übertragen. Gemäß einer FDMA (Frequency Division Multiple Access)-Komponente sind dem Funkkommunikationssystem mehrere Frequenzbereiche B zugeordnet.

Gemäß FIG 3 bestehen diese Funkblöcke zur Nutzdatenübertragung aus Datenteilen dt mit Datensymbolen d, in denen Abschnitte mit empfangsseitig bekannten Mittambeln m eingebettet sind. Die Daten d sind verbindungsindividuell mit einer Feinstruktur, einem Speizcode (CDMA-Code), gespreizt, so daß empfangsseitig beispielsweise K Datenkanäle DK1, DK2, DK3,.. DKK durch diese CDMA-Komponente separierbar sind. Jedem dieser Datenkanäle DK1, DK2, DK3,.. DKK wird sendeseitig pro Symbol eine bestimmte Energie E zugeordnet.

Die Spreizung von einzelnen Symbolen der Daten d mit Q Chips bewirkt, daß innerhalb der Symboldauer Ts Q Subabschnitte der Dauer Tc übertragen werden. Die Q Chips bilden dabei den individuellen CDMA-Code. Die Mittambel m besteht aus L Chips, ebenfalls der Dauer Tc. Weiterhin ist innerhalb des Zeitschlitzes ts eine Schutzzeit guard der Dauer Tg zur Kompensation unterschiedlicher Signalaufzeiten der Verbindungen aufeinanderfolgender Zeitschlitze ts vorgesehen.

Innerhalb eines breitbandigen Frequenzbereiches B werden die aufeinanderfolgenden Zeitschlitze ts nach einer Rahmenstruktur gegliedert. So werden acht Zeitschlitze ts zu einem Rahmen zusammengefaßt, wobei ein bestimmter Zeitschlitz des Rahmens einen Frequenzkanal zur Nutzdatenübertragung bildet und wiederkehrend von einer Gruppe von Verbindungen genutzt wird. Weitere Frequenzkanäle, beispielsweise zur Frequenz- oder Zeitsynchronisation der mobilen Funkstationen werden nicht in jedem Rahmen, jedoch zu vorgegebenen Zeitpunkten innerhalb eines Multirahmens eingeführt. Die Abstände zwischen diesen Frequenzkanälen bestimmen die Kapazität, die das Funk-Kommunikationssystem dafür zur Verfügung stellt.

Die Parameter der Funkschnittstelle sind z.B. wie folgt:

| Dauer eines Funkblocks | 577 µs |
|---|---|
| Anzahl Chips pro Mittambel m | 243 |
| Schutzzeit Tg | 32 µs |
| Datensymbole pro Datenteil N | 33 |
| Symboldauer Ts | 6,46 µs |
| Chips pro Symbol Q | 14 |
| Chipdauer Tc | 6 / 13 µs |

In Aufwärts- (MS -> BTS) und Abwärtsrichtung (BTS -> MS) können die Parameter auch unterschiedlich eingestellt werden.

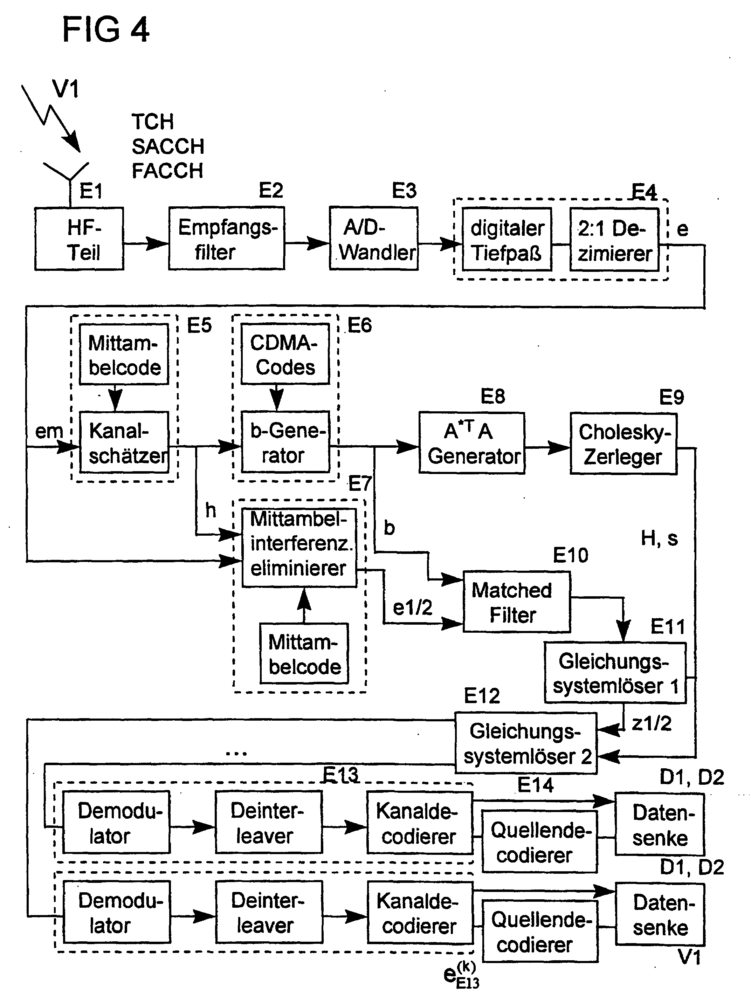

In FIG 4 wird beispielhaft der Empfangspfad in einem Joint-Detection-Empfänger detailliert dargestellt. Der Empfänger bezieht sich auf Funkstationen, die sowohl Basisstationen als auch mobile Funkstationen sein können. Es wird in FIG 4 jedoch nur die Signalverarbeitung für eine beispielhafte Kommunikationsverbindung V1 gezeigt.

In dem Teilmodul E1 erfolgt die Umsetzung der Empfangssignale aus dem Sendefrequenzband in den Tiefpaßbereich und die Aufspaltung in eine reale und eine imaginäre Komponente. Im Teilmodul E2 erfolgt eine analoge Tiefpaßfilterung und im Teilmodul E3 schließlich eine 2-fache Überabtastung des Empfangssignals mit 13/3 MHz und einer Wortbreite von 12 bit.

Im Teilmodul E4 erfolgt eine digitale Tiefpaßfilterung mit einem Filter der Bandbreite 13/6 MHz mit möglichst hoher Flankensteilheit zur Kanaltrennung. Anschließend erfolgt im Teilmodul E4 eine 2:1 Dezimierung des 2-fach überabgetasteten Signals.

Das derart gewonnene Empfangssignal e besteht im wesentlichen aus zwei Teilen, nämlich aus einem Anteil em zur Kanalschätzung und aus den Anteilen e1 und e2 zur Datenschätzung. Im Teilmodul E5 erfolgt die Schätzung aller Kanalimpulsantworten $h^{(k)}$ mittels eines bekannten Mittambelgrundcodes m aller im jeweiligen Zeitschlitz übertragener Datenkanäle.

Im Teilmodul E6 werden Parameter $b^{(k)}$ für angepaßte Filter für jeden Datenkanal unter Verwendung der CDMA-Codes $c^{(k)}$ bestimmt. Im Teilmodul E7 erfolgt die Eliminierung der von den Mittambeln $m^{(k)}$ herrührenden Interferenzen in den zur Datenschätzung benutzten Empfangsblöcken e1/2. Dies ist durch die Kenntnis von $h^{(k)}$ und $m^{(k)}$ möglich.

Im Teilmodul E8 efolgt die Berechnung der Kreuzkorrelationsmatrix $A^{*T} A$. Da $A^{*T} A$ Töplitzstruktur hat, ist hier nur die Berechnung eines kleines Teils der Matrix nötig, der dann zur Erweiterung auf die komplette Größe verwendet werden kann. Im Teilmodul E9 erfolgt eine Cholesky-Zerlegung von $A^{*T} A$ in $H^{*T} H$, wobei H eine obere Dreiecksmatrix ist. Aufgrund der Töplitzstruktur von $A^{*T} A$ hat auch H näherungsweise eine Töplitzstuktur und muß nicht vollständig berechnet werden. Ein Vektor s repräsentiert die Kehrwerte der Diagonalelemente von H, die vorteilhaft bei den Gleichungssystemlösern benutzt werden können.

Im Teilmodul E10 erfolgt eine angepaßte Filterung (matched filter) der Empfangssymbolfolgen e1/2 mit $b^{(k)}$. Teilmodul E11 realisiert die Gleichungssystemlöser 1 für $H^{*T}*z1/2=e1/2$, und Teilmodul E12 die Gleichungssystemlöser 2 für $H*d1/2=z1/2$. Im Teilmodul E13 werden die geschätzten Daten d1/2 demoduliert, entwürfelt und schließlich mittels Viterbi-Decodierer faltungsdecodiert. Die decodierten Datenblöcke $e^{(k)}_{E13}$ werden wahlweise einer ersten Datensenke D1 oder über den Quellendecodierer E14 einer zweiten Datensenke D2 zugeführt. Die Quellendecodierung ist bei Datenblöcken notwendig, die über Signalisierungskanäle SACCH oder FACCH übertragen wurden.

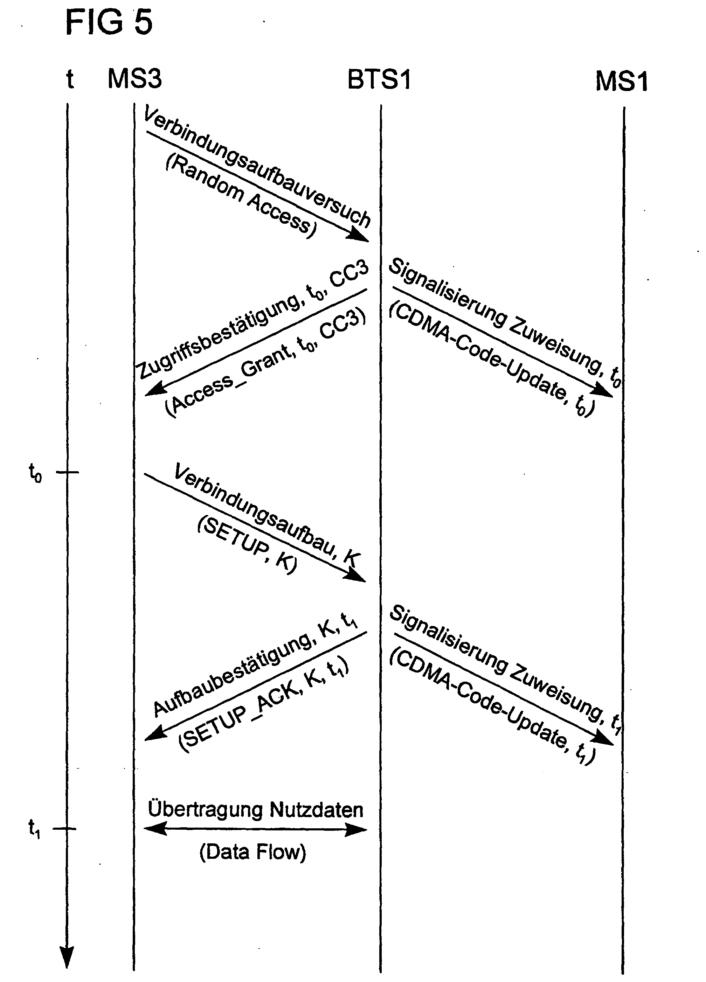

Nach dem Erfindungsgegenstand wird dieser Empfänger beispielhaft auch in der ersten mobilen Funkstation MS1 eingesetzt, wobei in dem Teilmodul E6 neben dem zugewiesenen ersten CDMA-Code CC1 auch der der zweiten mobilen Funkstation MS2 zugewiesene zweite CDMA-Code CC2 verwendet wird. In der FIG 5 wird im folgenden ein beispielhafter zeitlicher Ablauf einer Signalsierung einer Zuweisung eines CDMA-Codes zu der dritten mobilen Funkstation MS3 dargestellt.

Die FIG 5 zeigt ein Signalablaufdiagramm mit einem durch die dritte mobile Funkstation MS3 initiierten Verbindungsaufbau und einer von der ersten Basisstation BTS1 durchgeführten Signalisierung der Zuweisung eines CDMA-Codes zu der dritten mobilen Funkstation MS3 und einer Sigalisierung dieser Zuweisung zu der ersten mobilen Funkstation MS1.

Die Verwaltung der Funkressourcen in dem Funkversorgungsbereich der ersten Basisstation BTS1, insbesondere der CDMA-Codes, erfolgt beispielhaft in der mit der ersten Basisstation BTS1 verbundenen Einrichtung zur Zuteilung funktechnischer Ressourcen RNM, wie sie aus der FIG 1 bekannt ist. Somit verfügt die Einrichtung zur Zuteilung funktechnischer Ressourcen RNM auch über Informationen über die Zuweisung von CDMA-Codes in dem benachbarten Funkversorgungsgebiet einer zweiten Basisstation BTS2 und kann eine optimale Zuweisung zur Minimierung der Interzellinterferenz zwischen den benachbarten Funkversorgungsbereichen durchführen.

Die dargestellte Signalisierung basiert auf der allgemein bekannten und standardisierten GSM-Signalisierung, wobei einige Signalisierungsnachrichten für das erfindungsgemäße Verfahren erweitert werden, um die zusätzliche Signalisierung der Zuweisung von CDMA-Codes zu gestalten. Zusätzlich zu der bekannten GSM-Signalisierung wird beispielsweise eine Signalisierungsnachricht "Signalisierung Zuweisung" (CDMA-Code-Update) zur Signalisierung der Zuweisung eines CDMA-Codes zu einer weiteren mobilen Funkstation, in diesem Fall zu der dritten mobilen Funkstation MS3, verwendet.

In dem Beispiel der FIG 5 initiiert die dritte mobile Funkstation MS3, die sich gemäß der FIG 1 in dem Funkversorgungsbereich der ersten Basisstation BTS1 befindet, einen "Verbindungsaufbauversuch" (Random Access) auf einem dafür reservierten Übertragungskanal RACH (Random Access Channel). Dieser "Verbindungsaufbauversuch" wird der dritten mobilen Funkstation MS3 von der ersten Basisstation BTS1 durch eine "Zugriffsbestätigung" (Access_Grant) bestätigt. Die Signalisierung der "Zugriffsbestätigung" beinhaltet weiterhin die Zuweisung eines CDMA-Codes CC3, den die dritte mobile Funkstation MS3 zur Detektion von weiteren Signalisierungsdaten verwenden soll. Desweiteren kann in der Signalisierungnachricht "Zugriffsbestätigung" noch die Zuweisung der anderen aktiven CDMA-Codes, wie beispielsweise des der ersten mobilen Funkstation MS1 zugewiesenen ersten CDMA-Codes CC1 und des der zweiten mobilen Funkstation MS2 zugewiesenen zweiten CDMA-Codes CC2, sowie ein Startzeitpunkt $t_0$, der die Startzeit für die Verwendung des dritten CDMA-Codes CC3 definiert, übertragen werden.

Über die erste Basisstation BTS1 werden alle aktiven mobilen Funkstationen, die sich ebenfalls in ihrem Funkversorgungsbereich befinden und Nutzdaten in dem gleichen Frequenzkanal und Zeitschlitz wie die dritte mobile Funkstation MS3 übertragen, über den neu zugewiesenen dritten CDMA-Code CC3 informiert. Die Signalisierung der Zuweisung des dritten CDMA-Codes CC3 zu den anderen aktiven mobilen Funkstationen erfolgt über eine "Signalisierung Zuweisung" (CDMA-Code-Update), wobei das dargestellte Beispiel der FIG 5 auf die Signalisierung der Zuweisung des neuen dritten CDMA-Codes CC3 zu der ersten mobilen Funkstation MS1 beschränkt ist. Zusätzlich wird in den Signalisierungsnachrichten "Signalisierung Zuweisung" zu der ersten mobilen Funkstation MS1 und "Zugriffsbestätigung" zu der dritten mobilen Funkstation MS3 jeweils der Startzeitpunkt $t_0$ der Verwendung des dritten CDMA-Codes CC3 übertragen. Mittels dieser Signalisierung ist es der ersten mobilen Funkstation MS1 möglich, nach dem Startzeitpunkt $t_0$ die Detektion der Nutzdaten der Kommunikationsverbindung V1 unter Verwendung des zugewiesen eigenen ersten CDMA-Codes CC1, der weiteren in dem Funkversorgungsbereich aktiven CDMA-Codes sowie des neu zugewiesenen dritten CDMA-Codes CC3 zu durchzuführen.

Nach Erreichen des Startzeitpunktes $t_0$ ist auch der dritten mobilen Funkstation MS3 die Benutzung des zugewiesenen dritten CDMA-Codes CC3 auf dem Signalisierungskanal gestattet, wonach sie der ersten Basisstation BTS1 über die Signalisierungsnachricht "Verbindungsaufbau" (SETUP) den Verbindungsaufbau und die Anzahl K der gewünschten, durch unterschiedliche CDMA-Codes gekennzeichneten, Übertragungskanäle signalisiert. Bei möglichen Verbindungsaufbau wird der dritten mobilen Funkstation MS3 von der ersten Basisstation BTS1 daraufhin eine "Aufbaubestätigung" (SETUP_ACK), eine Zuweisung neuer CDMA-Codes der gewünschten Anzahl K und ein Startzeitpunkt $t_1$ für die Benutzung der neuen CDMA-Codes signalisiert. Wie bereits vorangehend beschrieben, signalisiert die erste Basisstation BTS1 der ersten mobilen Funkstation MS1 wiederum die Zuweisung der neuen CDMA-Codes, den Abbau des dritten CDMA-Codes und den definierten Startzeitpunkt $t_1$. Nach Erreichen des Startzeitpunktes $t_1$ kann die dritte mobile Funkstation MS3 die Übertragung der Nutzdaten zu der ersten Basisstation BTS1 unter Verwendung der zugewiesenen K CDMA-Codes beginnen. Gleichzeitig kann die erste mobile Funkstation MS1 die neuen zugewiesenen CDMA-Codes für die Detektion der Nutzdaten auf der Kommunikationsverbindung V1 beispielsweise nach dem Joint-Detection-Verfahren verwenden.

**Patentansprüche**

1.  Verfahren zur Übertragung von Nutzdaten in einem Funkkommunikationssystem, das eine erste Basisstation (BTS1) sowie zumindest eine erste Funkstation (MS1) und eine zweite Funkstation (MS2), die sich jeweils in einem Funkversorgungsbereich der ersten Basisstation (BTS1) befinden, aufweist, bei dem

    -   dem Funkversorgungsbereich der ersten Basisstation (BTS1) zumindest ein Frequenzkanal mit mehreren CDMA-Codes (CC1, CC2, CC3...) zugeordnet wird,

    -   Nutzdaten von Kommunikationsverbindungen (V1, V2) von/zu der ersten Funkstation (MS1) und der zweiten Funkstation (MS2) gemäß einem CDMA-Teilnehmerseparierungsverfahren übertragen werden,

**dadurch gekennzeichnet, daß**

    -   der ersten Funkstation (MS1) eine Zuweisung eines ersten. CDMA-Codes (CC1) und der zweiten Funkstation (MS2) eine Zuweisung eines zweiten CDMA-Codes (CC2) zur Detektion der jeweiligen Nutzdaten signalisiert werden,

    -   der ersten Funkstation (MS1) zusätzlich die Zuweisung des zweiten CDMA-Codes (CC2) zu der zweiten Funkstation (MS2) signalisiert wird, und

    -   von der ersten Funkstation (MS1) der erste CDMA-Code (CC1) und der zweite CDMA-Code (CC2) für die Detektion der übertragenen Nutzdaten zu der ersten Funkstation (MS1) verwendet werden.

2.  Verfahren nach Anspruch 1,
    **dadurch gekennzeichnet, daß**
    die Nutzdaten zusätzlich innerhalb eines TDMA-Teilnehmerseparierungsverfahrens übertragen werden, wobei ein Frequenzkanal in mehrere Zeitschlitze (ts1...) untergliedert ist.

3.  Verfahren nach einem vorhergehenden Anspruch,
    **dadurch gekennzeichnet, daß**
    der ersten Funkstation (MS1) der erste CDMA-Code (CC1) und der zweiten Funkstation (MS2) der zweite CDMA-Code (CC2) netzseitig zugewiesen und von der ersten Basisstation (BTS1) signalisiert werden.

4.  Verfahren nach Anspruch 1 oder 2,
    **dadurch gekennzeichnet, daß**
    von der ersten Funkstation (MS1) der erste CDMA-Code (CC1) und von der zweiten Funkstation (MS2) der zweite CDMA-Code (CC2) ausgewählt und die Auswahl jeweils der ersten Basisstation (BTS1) signalisiert wird.

5.  Verfahren nach einem vorhergehenden Anspruch,
    **dadurch gekennzeichnet, daß**

    -   der ersten Funkstation (MS1) die Zuweisung von weiteren CDMA-Codes (CC3...) zu weiteren Funkstationen (MS3...) signalisiert wird, die sich in dem gleichen und/oder in einem jeweils benachbarten Funkversorgungsbereich befinden und von/zu denen jeweils Nutzdaten in einem gleichen Frequenzkanal und/oder in einem gleichen Zeitschlitz übertragen werden, und

    -   von der ersten Funkstation (MS1) die weiteren CDMA-Codes (CC3...) zusätzlich für die Detektion der übertragenen Nutzdaten verwendet werden.

6.  Verfahren nach dem vorhergehenden Anspruch,

**dadurch gekennzeichnet, daß**
der ersten Funkstation (MS1) nur die Zuweisung der gleichzeitig aktiven weiteren CDMA-Codes (CC3...) zu weiteren Funkstationen (MS3...) signalisiert wird.

7. Funkkommunikationssystem zur Übertragung von Nutzdaten, das eine erste Basisstation (BTS1) sowie zumindest eine erste Funkstation (MS1) und eine zweite Funkstation (MS2), die sich jeweils in einem Funkversorgungsbereich der ersten Basisstation (BTS1) befinden, aufweist, wobei dem Funkversorgungsbereich der ersten Basisstation (BTS1) zumindest ein Frequenzkanal mit mehreren CDMA-Codes (CC1, CC2, CC3...) zugeordnet ist, und eine Übertragung von Nutzdaten von Kommunikationsverbindungen (V1, V2) von/zu der ersten Funkstation (MS1) und der zweiten Funkstation (MS2) gemäß einem CDMA-Teilnehmerseparierungsverfahren erfolgt, **dadurch gekennzeichnet**, **da**ß

- die erste Basisstation (BTS1) Mittel zum Zuweisen eines ersten CDMA-Codes (CC1) zu der ersten Funkstation (MS1) und eines zweiten CDMA-Codes (CC2) zu der zweiten Funkstation (MS2) zur Detektion der jeweiligen Nutzdaten aufweist,
- die erste Basisstation (BTS1) Mittel zum Signalisieren der Zuweisung des ersten CDMA-Codes (CC1) zu der ersten Funkstation (MS1) und des zweiten CDMA-Codes (CC2) zu der zweiten Funkstation (MS2) sowie zum zusätzlichen Signalisieren der Zuweisung des zweiten CDMA-Codes (CC2) zu der zweiten Funkstation (MS2) zu der ersten Funkstation (MS1) aufweist, und
- die erste Funkstation (MS1) Mittel zum Detektieren der zu ihr übertragenen Nutzdaten mittels des ersten (CC1) und zweiten CDMA-Codes (CC2) aufweist.

8. Funkkommunikationssystem nach Anspruch 7, **gekennzeichnet durch**
weitere Funkstationen (MS3...), die sich in dem Funkversorgungsbereich der ersten Basisstation (BTS1) und/oder in einem benachbarten Funkversorgungsbereich einer zweiten Basisstation (BTS2) befinden.

9. Funkkommunikationssystem nach Anspruch 7 oder 8, **dadurch gekennzeichnet, daß**
in den Funkstationen (MS1, MS2, MS3...) jeweils eine Speichereinrichtung zur Speicherung von CDMA-Codes (CC1, CC2, CC3...) verwirklicht ist.

10. Funkkommunikationssystem nach einem der Ansprüche 7 bis 9,
**dadurch gekennzeichnet**, **da**ß
das Funkkommunikationssystem als ein Mobilfunksystem verwirklicht ist, wobei die erste Basisstation (BTS1) als eine Basisstation und die Funkstationen (MS1, MS2, MS3...) jeweils als mobile Funkstationen ausgestaltet sind.

## Claims

1. Method for transmission of payload data in a radio communications system which has a first base station (BTS1) and at least one first radio station (MS1) and a second radio station (MS2) which are each located in a radio supply area of the first base station (BTS1), in which

- the radio supply area of the first base station (BTS1) is allocated at least one frequency channel having two or more CDMA codes (CC1, CC2, CC3...),
- payload data from communication connections (V1, V2) is transmitted from/to the first radio station (MS1) and the second radio station (MS2) using a CDMA subscriber separation method,

**characterized in that**

- the first radio station (MS1) is signalled an assignment of a first CDMA code (CC1), and the second radio station (MS2) is signalled an assignment of a second CDMA code (CC2), for detection of the respective payload data,
- the first radio station (MS1) is additionally signalled the assignment of the second CDMA code (CC2) to the second radio station (MS2), and
- the first radio station (MS1) uses the first CDMA code (CC1) and the second CDMA code (CC2) for detection of the transmitted payload data to the first radio station (MS1).

2. Method according to Claim 1,
**characterized in that**
the payload data is additionally transmitted within a TDMA subscriber separation method, with a frequency channel being subdivided into two or more time slots (ts1...).

3. Method according to a preceding claim,
**characterized in that**
the first radio station (MS1) is assigned the first CDMA code (CC1), and the second radio station (MS2) is assigned the second CDMA code (CC2) on the network side, and these assignments are signalled from the first base station (BTS1).

**4.** Method according to Claim 1 or 2, **characterized in that** the first radio station (MS1) selects the first CDMA code (CC1), the second radio station (MS2) selects the second CDMA code (CC2), and the selection is in each case signalled to the first base station (BTS1).

**5.** Method according to a preceding claim, **characterized in that**

- the first radio station (MS1) is signalled the assignment of the further CDMA codes (CC3...) to further radio stations (MS3...) which are located in the same and/or in the respectively adjacent radio supply area, and from which/to which payload data is in each case transmitted in the same frequency channel and/or in the same time slot, and
- the first radio station (MS1) additionally uses the further CDMA codes (CC3...) for detection of the transmitted payload data.

**6.** Method according to the preceding claim, **characterized in that** the first radio station (MS1) is signalled only the assignment of the simultaneously active further CDMA codes (CC3...) to further radio stations (MS3...).

**7.** Radio communications system for transmission of payload data for a first base station (BTS1) as well as at least one first radio station (MS1) and a second radio station (MS2) which are each located in a radio supply area of the first base station (BTS1), with the radio supply area of the first base station (BTS1) being allocated at least one frequency channel having two or more CDMA codes (CC1, CC2; CC3...), and payload data for communications connections (V1, V2) being transmitted from/to the first radio station (MS1) and the second radio station (MS2) using a CDMA subscriber separation method, **characterized in that**

- the first base station (BTS1) has means for assigning a first CDMA code (CC1) to the first radio station (MS1), and for assigning a second CDMA code (CC2) to the second radio station (MS2), for detection of the respective payload data,
- the first base station (BTS1) has means for signalling the assignment of the first CDMA code (CC1) to the first radio station (MS1) and the assignment of the second CDMA code (CC2) to the second radio station (MS2), as well as for additional signalling to the first radio station (MS1) of the assignment of the second CDMA code (CC2) to the second radio station (MS2), and

- the first radio station (MS1) has means for detection of the payload data that is transmitted to it by means of the first (CC1) and second (CC2) CDMA codes.

**8.** Radio communications system according to Claim 7, **characterized by** further radio stations (MS3...) which are located in the radio supply area of the first base station (BTS1) and/or in an adjacent radio supply area of a second base station (BTS2).

**9.** Radio communications system according to Claim 7 or 8, **characterized in that** a memory device is provided in each of the radio stations (MS1, MS2, MS3...) for storage of the respective CDMA codes (CC1, CC2, CC3...).

**10.** Radio communications system according to one of Claims 7 to 9, **characterized in that** the radio communications system is in the form of a mobile radio system, with the first base station (BTS1) being in the form of a base station, and the radio stations (MS1, MS2, MS3...) each being in the form of mobile radio stations.

**Revendications**

**1.** Procédé de transmission de données utilisateur dans un système de radiocommunication lequel comprend une première station de base (BTS1) ainsi qu'au moins une première station radio (MS1) et une deuxième station radio (MS2) se trouvant chacune dans une zone de couverture radio de la première station de base (BTS1), dans lequel

- la zone de couverture radio de la première station de base (BTS1) se voit attribuer au moins un canal de fréquences avec plusieurs codes CDMA (CC1, CC2, CC3...),
- des données utilisateur de liaisons de communication (V1, V2) depuis/vers la première station radio (MS1) et la deuxième station radio (MS2) sont transmises selon un procédé de séparation d'abonnés CDMA,

**caractérisé en ce que**

- la première station radio (MS1) se voit signaler une attribution d'un premier code CDMA (CC1) et la deuxième station radio (MS2) une attribution d'un deuxième code CDMA (CC2) pour la détection des données utilisateur respectives,

- la première station radio (MS1) se voit signaler en plus l'attribution du deuxième code CDMA (CC2) à la deuxième station radio (MS2), et
- la première station radio (MS1) utilise le premier code CDMA (CC1) et le deuxième code CDMA (CC2) pour la détection des données utilisateurs transmises à la première station radio (MS1).

2. Procédé selon la revendication 1,
   **caractérisé en ce que**
   les données utilisateurs sont transmises en plus au sein d'un procédé de séparation d'abonnés TDMA, dans lequel un canal de fréquences est subdivisé en plusieurs créneaux temporels (ts1 ...).

3. Procédé selon une revendication précédente,
   **caractérisé en ce que**,
   par le réseau, la première station radio (MS1) se voit attribuer le premier code CDMA (CC1) et la deuxième station radio (MS2) le deuxième code CDMA (CC2) et que lesdits codes sont signalés par la première station de base (BTS1).

4. Procédé selon la revendication 1 ou 2,
   **caractérisé en ce que**
   la première station radio (MS1) sélectionne le premier code CDMA (CC1) et la deuxième station radio (MS2) le deuxième code CDMA (CC2) et que la sélection est à chaque fois signalée à la première station de base (BTS1).

5. Procédé selon une revendication précédente,
   **caractérisé en ce que**

   - la première station radio (MS1) se voit signaler l'attribution d'autres codes CDMA (CC3 ...) à d'autres stations radio (MS3 ...) lesquelles se trouvent dans la même zone de couverture radio et/ou dans une zone de couverture radio voisine et depuis/vers lesquelles des données utilisateur sont transmises dans un même canal de fréquences et/ou dans un même créneau temporel, et
   - la première station radio (MS1) utilise les autres codes CDMA (CC3 ...) en plus pour la détection des données utilisateur transmises.

6. Procédé selon la revendication précédente,
   **caractérisé en ce que**
   la première station radio (MS1) ne se voit signaler que l'attribution des autres codes CDMA (CC3,...) simultanément actifs à d'autres stations radio (MS3...).

7. Système de radiocommunication de transmission de données utilisateur, lequel comprend une première station de base (BTS1) ainsi qu'au moins une première station radio (MS1) et une deuxième station radio (MS2) se trouvant chacune dans une zone de couverture radio de la première station de base (BTS1), dans lequel il est attribué à la zone de couverture radio de la première station de base (BTS1) au moins un canal de fréquences avec plusieurs codes CDMA (CC1, CC2, CC3 ...) et dans lequel une transmission de données utilisateur de liaisons de communication (V1, V2) depuis/vers la première station radio (MS1) et la deuxième station radio (MS2) s'effectue selon un procédé de séparation d'abonnés CDMA,
   **caractérisé en ce que**

   - la première station de base (BTS1) comprend des moyens pour attribuer un premier code CDMA (CC1) à la première station radio (MS1) et un deuxième code CDMA (CC2) à la deuxième station radio (MS2) pour la détection des données utilisateur respectives,
   - la première station de base (BTS1) comprend des moyens pour signaler l'attribution du premier code CDMA (CC1) à la première station radio (MS1) et du deuxième code CDMA (CC2) à la deuxième station radio (MS2) ainsi que pour signaler en plus l'attribution du deuxième code CDMA (CC2) à la deuxième station radio (MS2) à la première station radio (MS1), et
   - la première station radio (MS1) comprend des moyens pour détecter les données utilisateur transmises vers elle au moyen du premier (CC1) et du deuxième code CDMA (CC2).

8. Système de radiocommunication selon la revendication 7,
   **caractérisé par**
   d'autres stations radio (MS3 ...) se trouvant dans la zone de couverture radio de la première station de base (BTS1) et/ou dans une zone de couverture radio voisine d'une deuxième station de base (BTS2).

9. Système de radiocommunication selon la revendication 7 ou 8,
   **caractérisé en ce**
   **qu'**il est réalisé dans les stations radio (MS1, MS2, MS3 ...) respectivement un dispositif de mémoire pour mémoriser les codes CDMA (CC1, CC2, CC3 ...).

10. Système de radiocommunication selon l'une des revendications 7 à 9,
    **caractérisé en ce que**
    le système de radiocommunication est réalisé sous la forme d'un système de radiocommunication mobile, la première station de base (BTS1) se présentant sous la forme d'une station de base et les stations radio (MS1, MS2, MS3 ...) sous la forme de stations radio mobiles.

FIG 1

## FIG 2

E

B

ts   ts1   ts2   ts3   ts4   ts5   ts6   ts7   ts8

t

(TDMA)

## FIG 3

Ts*N    L*Tc    Ts*N   Tg

| 1 | 2 | 3 | dt (d) | N | m | 1 | 2 | 3 | dt (d) | N | guard |

| 1 | 2 | 3 | 4 | L |

| 1 | 2 | 3 | 4 | code | Q |

Tc    Tc

Ts=Q*Tc

# FIG 4

V1

TCH
SACCH
FACCH

| E1 | E2 | E3 | E4 |
|---|---|---|---|

HF-Teil → Empfangs-filter → A/D-Wandler → [ digitaler Tiefpaß | 2:1 De-zimierer ] e

E5 — Mittam-belcode

E6 — CDMA-Codes

em → Kanal-schätzer

b-Gene-rator

E8 — A*T A Generator

E9 — Cholesky-Zerleger

h → E7 Mittambel-interferenz. eliminierer

b

H, s

Mittam-belcode

e1/2 → E10 Matched Filter

E11 — Gleichungs-systemlöser 1

E12 — z1/2 — Gleichungs-systemlöser 2

...

E13 — Demodu-lator → Deinter-leaver → Kanalde-codierer

E14 — Quellende-codierer

D1, D2 — Daten-senke

D1, D2 — Demodu-lator → Deinter-leaver → Kanalde-codierer — Quellende-codierer — Daten-senke

V1

$e_{E13}^{(k)}$

# FIG 5

| t | MS3 | BTS1 | MS1 |
|---|---|---|---|

Verbindungsaufbauversuch
(Random Access)

Zugriffsbestätigung, $t_0$, CC3
(Access_Grant, $t_0$, CC3)

Signalisierung Zuweisung, $t_0$
(CDMA-Code-Update, $t_0$)

$t_0$

Verbindungsaufbau, K
(SETUP, K)

Aufbaubestätigung, K, $t_1$
(SETUP_ACK, K, $t_1$)

Signalisierung Zuweisung, $t_1$
(CDMA-Code-Update, $t_1$)

$t_1$

Übertragung Nutzdaten
(Data Flow)